# EUROPÄISCHE PATENTSCHRIFT

(11) **EP 3 985 808 B1**
(45) Veröffentlichungstag und Bekanntmachung des Hinweises auf die Patenterteilung: **07.06.2023**
(21) Anmeldenummer: 20201837.0
(22) Anmeldetag: 14.10.2020
(51) Int. Cl.: H01S 3/00, H01S 3/06, H01S 3/10, H01S 3/102, H01S 3/063, H01S 3/083, H01S 3/107, H01S 3/16

(54) **VORRICHTUNG UND VERFAHREN ZUM ERZEUGEN EINER ELEKTROMAGNETISCHEN NUTZSTRAHLUNG**
METHOD AND DEVICE FOR GENERATING ELECTROMAGNETIC USEFUL BEAM
DISPOSITIF ET PROCÉDÉ DE GÉNÉRATION D'UN RAYONNEMENT ÉLECTROMAGNÉTIQUE UTILE

(43) Veröffentlichungstag der Anmeldung: 20.04.2022
(73) Patentinhaber: Fraunhofer-Gesellschaft zur Förderung der angewandten Forschung e.V., 80686 München (DE)
(72) Erfinder: HERR, Simon J., 79110 Freiburg (DE)
(74) Vertreter: WSL Patentanwälte Partnerschaft mbB

(56) Entgegenhaltungen:
- US-A1- 2009 059 968
- US-A1- 2013 195 128
- JIANG XUEFENG ET AL: "Optothermal dynamics in whispering-gallery microresonators", LIGHT: SCIENCE & APPLICATIONS, Bd. 9, Nr. 24, 24. Februar 2020 (2020-02-24), Seiten 1-15, XP055788151, DOI: 10.1038/s41377-019-0239-6 Gefunden im Internet: URL:http://www.nature.com/articles/s41377- 019-0239-6>
- BREUNIG INGO ET AL: "Tunable single-frequency lasing in whispering gallery resonators", ENHANCED AND SYNTHETIC VISION 2003 : [CONFERENCE ENHANCED AND SYNTHETIC VISION 2002] ; 21 APRIL 2003, ORLANDO, FLORIDA, USA; [PROCEEDINGS OF SPIE ISSN 0277-786X], SPIE, US, Bd. 11266, 2. März 2020 (2020-03-02), Seiten 112660Q-112660Q, XP060130304, DOI: 10.1117/12.2542153 ISBN: 978-1-5106-3673-6

## Beschreibung

Die vorliegende Erfindung betrifft ein Verfahren zum Erzeugen einer elektromagnetischen Nutzstrahlung mit einer Nutzfrequenz mit den Schritten: a) Erzeugen und Abstrahlen von Saatlicht mit einer Saatfrequenz, b) Einkoppeln des Saatlichts in einen externen optischen Resonator mit einer Resonanzfrequenz, wobei die Resonanzfrequenz im Wesentlichen zumindest zunächst gleich der Saatfrequenz ist, sodass in dem Resonator eine elektromagnetische Resonatorstrahlung mit der Resonanzfrequenz oszilliert, c) zeitlich nach Schritt b) adiabatisches Ändern der Resonanzfrequenz des Resonators, so dass die Resonanzfrequenz der in dem Resonator oszillierenden Resonatorstrahlung über eine Abstimmbandbreite geändert wird, wobei die Saatfrequenz der Änderung der Resonanzfrequenz nicht folgt, und d) Auskoppeln der Resonatorstrahlung als Nutzstrahlung mit der von der Saatfrequenz verschiedenen Nutzfrequenz aus dem Resonator.

Derartige optische Resonatoren finden Anwendung in einer Vielzahl von photonischen Bauelementen. Als problematisch erweist es sich insbesondere bei Resonatoren, die einmalig, d.h. über ein festgelegtes Zeitintervall hinweg mit dem Saatlicht gepumpt werden, dass die mögliche Nutzungsdauer der aus dem Resonator ausgekoppelten Nutzstrahlung durch dessen Abklingzeit τ bestimmt ist. Dabei ist die Abklingzeit τ gegeben als τ = Qλ/(2πc), wobei Q die Güte des Resonators, λ die Vakuum-Wellenlänge der Resonatorstrahlung in dem Resonator und c die Vakuumlichtgeschwindigkeit ist. In wenige Millimeter großen Mikroresonatoren aus Lithiumniobat werden typischerweise Güten in der Größenordnung von 10⁸ erreicht, was Abklingzeiten, d.h. Nutzungsdauern im Bereich von etwa 100 ns entspricht. Bei chip-integrierten Mikroresonatoren liegen die erreichbaren Güten derzeit noch deutlich darunter. Zwar kann der optische Resonator erneut gepumpt werden, aber auch die dann in dem Resonator oszillierende Nutzstrahlung hat wieder nur eine Nutzungsdauer von etwa 100 ns.

In der Veröffentlichung Jiang and Yang: "Optothermal dynamics in whispering-gallery microresonators", Light: Science & Applications (2020)9:24, werden optische Flüstergalerie-Mikroresonatoren mit ultrahohem Gütefaktor und kleinem Modenvolumen offenbart. Sie haben sich als vielseitige Plattform für ein breites Spektrum von Anwendungen in der Photonik erwiesen, z. B. in der nichtlinearen Optik, der Optomechanik, der Quantenoptik und der Informationsverarbeitung. Thermisches Verhalten, das durch Leistungsaufbau in den Resonatoren oder durch Umgebungsstörungen hervorgerufen wird, ist in Flüstergalerie-Resonatoren mit hohem Qualitätsfaktor allgegenwärtig und spielt eine wichtige Rolle bei ihrem Betrieb für verschiedene Anwendungen. In dieser Veröffentlichung werden die Mechanismen der durch Laserlicht induzierten thermischen nichtlinearen Effekte, einschließlich thermischer Bistabilität und thermischer Oszillation, diskutiert. Durch Abstimmung der Umgebungstemperatur verschiebt sich die Resonanzmode, was auch für Anwendungen im Bereich der thermischen Abstimmung genutzt werden kann.

Demgegenüber liegt der vorliegenden Erfindung die Aufgabe zugrunde, ein Verfahren und eine Vorrichtung zum Erzeugen einer elektromagnetischen Nutzstrahlung mit einer erhöhten Nutzungsdauer bereitzustellen.

Zur Lösung dieser Aufgabe wird erfindungsgemäß ein Verfahren vorgeschlagen, das die Schritte aufweist:
a) Erzeugen und Abstrahlen von Saatlicht mit einer Saatfrequenz,
b) Einkoppeln des Saatlichts in einen externen optischen Resonator mit einer Resonanzfrequenz, wobei die Resonanzfrequenz zumindest zunächst im Wesentlichen gleich oder gleich der Saatfrequenz ist, sodass in dem Resonator eine elektromagnetische Resonatorstrahlung mit der Resonanzfrequenz oszilliert,
c) zeitlich nach Schritt b) adiabatisches Ändern der Resonanzfrequenz des Resonators, so dass die Resonanzfrequenz der in dem Resonator oszillierenden Resonatorstrahlung über eine Abstimmbandbreite geändert wird, wobei die Saatfrequenz der Änderung der Resonanzfrequenz nicht folgt, und
d) Auskoppeln der Resonatorstrahlung als Nutzstrahlung mit der von der Pumpfrequenz verschiedenen Nutzfrequenz aus dem Resonator,
e) Pumpen eines in dem Resonator angeordneten Verstärkungsmediums und
f) Verstärken der in dem Resonator oszillierenden Resonatorstrahlung in dem Verstärkungsmedium, wobei die Verstärkung kleiner ist als eine durch den Resonator und das Verstärkungsmedium vorgegebene für eine Lasertätigkeit des Resonators erforderliche Schwellenverstärkung.

Gemäß der vorliegenden Erfindung wird in der Nutzfrequenz abstimmbare bzw. durchstimmbare elektromagnetische Nutzstrahlung bereitgestellt. Zu diesem Zweck werden die Resonanzfrequenz des Resonators und damit die Frequenz der in dem Resonator oszillierenden Resonatorstrahlung sowie die Nutzfrequenz der aus dem Resonator ausgekoppelten Nutzstrahlung während der Nutzungsdauerdauer adiabatisch geändert. Auf diese Weise wird eine spektral abstimmbare Quelle bereitgestellt. Daher weist der optische Resonator eine abstimmbare Resonanzfrequenz auf.

Die auf diese Weise bereitgestellte Nutzstrahlung ist über einen großen Frequenzbereich hinweg zuverlässig abstimmbar, ohne dass dafür ein Abstimmen des Saatlichts erforderlich wäre. Daher treten bei dem Abstimmen keine Modensprünge auf, die sonst zu einer unkontrollierten Erzeugung von Nutzstrahlung führen.

In einer Ausführungsform ist die Durchstimmdauer im Wesentlichen gleich der Nutzungsdauer der Nutzstrahlung. Dabei wird als Durchstimmdauer die Zeit bezeichnet, die erforderlich ist, um die Resonanzfrequenz von der Saatfrequenz über die gesamte von dem Resonator bereitgestellte Abstimmungsbandbreite auf eine maximal von der Saatfrequenz beabstandete Nutzfrequenz abzustimmen. Die Nutzungsdauer der Nutzstrahlung ist dabei die Zeit, in der sich die aus dem Resonator ausgekoppelte Leistung der Nutzstrahlung auf 1/e (d.h. auf etwa 37 %) verringert.

Die Änderung der Nutzfrequenz ausgehend von der Saatfrequenz beruht ausschließlich auf einer Änderung bzw. einem Abstimmen der Resonanzfrequenz des Resonators. In einer Ausführungsform der Erfindung finden in dem Resonator keine optisch parametrischen Prozesse statt.

Die grundlegende Idee der vorliegenden Erfindung ist es, die Abklingzeit τ des optischen Resonators dadurch zu erhöhen, dass die in dem Resonator oszillierende Resonatorstrahlung eine Verstärkung unterhalb der Laserschwelle erfährt. Auf diese Weise kann die zunächst beschränkte Güte des Resonators kompensiert werden und die Nutzungsdauer der aus dem Resonator ausgekoppelten Nutzstrahlung wird verlängert. Man könnte auch von einer synthetischen Erhöhung der Güte des Resonators sprechen.

Dabei ist entscheidend für die vorliegende Erfindung, dass die Verstärkung der Resonatorstrahlung in dem Verstärkungsmedium unterhalb der für eine Lasertätigkeit des Resonators erforderlichen Schwellenverstärkung (Laserschwelle) liegt. Auf diese Weise wird sichergestellt, dass keine weiteren Resonatormoden anschwingen. Die Resonatorstrahlung und damit auch die aus dem Resonator ausgekoppelte Nutzstrahlung sind somit longitudinal und transversal einmodig.

Durch die Verlängerung der Abklingzeit und damit der Nutzungsdauer der aus dem Resonator austretenden Nutzstrahlung wird die Anwendbarkeit des Resonators deutlich erhöht. Insbesondere im Falle einer Abstimmbarkeit der Nutzstrahlung durch ein adiabatisches Durchstimmen der Resonanzfrequenz, muss diese Abstimmung nicht mehr so schnell erfolgen, sodass beispielsweise eine "langsamere" Elektronik genutzt werden kann. Ferner ist zu erwarten, dass das Licht spektral deutlich weiter, d.h. über eine größere Abstimmbandbreite hinweg, abgestimmt werden kann. So können auch chip-integrierte Mikroresonatoren für eine adiabatische Frequenzabstimmung technisch sinnvoll verwendet werden.

In einer Ausführungsform liegt die Abstimmbandbreite des Resonators innerhalb einer Verstärkungsbandbreite des Verstärkungsmediums. In einer weiteren Ausführungsform der Erfindung liegt eine Mittenfrequenz einer Saatfrequenzbandbreite des Saatlichts ebenfalls innerhalb der Verstärkungsbandbreite des Verstärkungsmediums.

Als externer Resonator wird im Sinne der vorliegenden Anmeldung ein Resonator bezeichnet, der außerhalb und zusätzlich zu einer ersten Strahlungsquelle vorgesehen ist, wobei die erste Strahlungsquelle Saatlicht zum Pumpen des externen Resonators erzeugt und abstrahlt, wobei das Saatlicht in den externen Resonator eingekoppelt wird.

Das Erzeugen des Saatlichts in Schritt a) des erfindungsgemäßen Verfahrens erfolgt mit herkömmlichen, aus dem Stand der Technik bekannten elektromagnetischen Strahlungsquellen, wie beispielsweise einem Laser. Das erzeugte und abgestrahlte Saatlicht wird erfindungsgemäß in den externen optischen Resonator eingekoppelt.

Damit das in Schritt a) erzeugte und abgestrahlte Saatlicht in dem externen optischen Resonator oszilliert, ist die Resonanzfrequenz des externen optischen Resonators zumindest zunächst im Wesentlichen gleich der Saatfrequenz des Saatlichts.

Nachdem das Saatlicht in den externen optischen Resonator eingekoppelt ist, oszilliert diese mit der Resonanzfrequenz des externen optischen Resonators und wird daher ab diesem Zeitpunkt als elektromagnetische Resonatorstrahlung bezeichnet.

Dass die Saatfrequenz und die Resonanzfrequenz des Resonators *zumindest zunächst* gleich oder im Wesentlichen gleich sind, bedeutet, dass zu Beginn der betrachteten Prozesse, d.h. während des Pumpens des Resonators diese Identität gegeben sein muss, aber zeitlich nach dem Einkoppeln des Saatlichts eine Änderung der betrachteten Resonanzfrequenz erfolgt, so dass dann zu einem späteren Zeitpunkt die betrachtete Resonanzfrequenz von der Saatfrequenz verschieden ist.

Sobald die Resonatorstrahlung den externen optischen Resonator verlassen hat, wird in dem Sinne der vorliegenden Erfindung von einer Nutzstrahlung gesprochen, die für darauffolgende Anwendungen, wie beispielsweise einer Abstandsmessung, verwendet werden kann.

In einer Ausführungsform der Erfindung ist der Resonator ein Mikroresonator. Insbesondere ist ein solcher Mikroresonator ein Resonator mit einem transversalen Modendurchmesser von 10.000 λ² oder weniger, vorzugsweise von 1.000 λ² oder weniger und besonders bevorzugt von 500 λ² oder weniger, wobei λ die Vakuumwellenlänge der Resonatorstrahlung im Resonator ist.

In einer Ausführungsform der Erfindung ist der Resonator derart ausgestaltet, dass die Lichtleitung durch eine Form, eine Struktur oder eine Beschaffenheit eines Materials erfolgt, wobei sich in dem Resonator die elektromagnetische Resonatorstrahlung in diesem Material ausbreitet. In einer Ausführungsform der Erfindung weist der Resonator eine Lichtleitung oder - führung in einem Wellenleiter, vorzugsweise in einem Stegwellenleiter, auf. In einer weiteren Ausführungsform ist der Resonator ein Flüstergalerieresonator, wobei der Resonator monolithisch aus einem für die Resonatorstrahlung transparenten Material hergestellt ist, das derart ausgebildet ist, dass die Resonatorstrahlung in dem Material geführt wird und in diesem propagiert.

Erfindungsgemäß umfasst der Resonator das Verstärkungsmedium, wobei das Verstärkungsmedium in einer Ausführungsform der Erfindung derart geformt, strukturiert oder beschaffen ist, dass das Verstärkungsmedium die Lichtleitung der Resonatorstrahlung übernimmt und die Resonatorstrahlung durch das Verstärkungsmedium propagiert.

In einer Ausführungsform der Erfindung ist das Verstärkungsmedium ein Vier-Niveau-Lasermedium. In einer solchen Ausführungsform ist die Transparenz des Verstärkungsmediums für die zu verstärkende Resonatorstrahlung von der Verstärkungspumpleistung unabhängig. Dies erhöht die Effizienz der Anordnung.

Erfindungsgemäß wird nach dem Einkoppeln des Saatlichts in den externen optischen Resonator die Resonanzfrequenz des externen optischen Resonators in einem an den Schritt b) anschließenden Schritt c) über eine Abstimmbandbreite geändert. D.h. das Einkoppeln des Saatlichts in den externen optischen Resonator erfolgt zumindest auch zeitlich vor dem Ändern der Resonanzfrequenz des externen optischen Resonators. Dadurch ist sichergestellt, dass zu Beginn der Änderung der Resonanzfrequenz bereits Saatlicht in den Resonator eingekoppelt wurde und in diesem als Resonatorstrahlung oszilliert.

Das Ändern der Resonanzfrequenz des externen optischen Resonators erfolgt adiabatisch, d.h. die Abstimmschritte, über welche die Resonanzfrequenz abgestimmt wird, und auch die Abstimmbandbreite, über welche die Resonanzfrequenz maximal abstimmbar ist, sind klein im Vergleich zu den am Verfahren beteiligten Frequenzen der elektromagnetischen Strahlung.

Es ist vorgesehen, dass das Ändern der Resonanzfrequenz zudem derart erfolgt, dass die Saatfrequenz des Saatlichts der Änderung der Resonanzfrequenz nicht folgt. D.h. das Erzeugen und Abstrahlen des Saatlichts in Schritt a) erfolgt unabhängig von der in Schritt c) erfolgenden Änderung der Resonanzfrequenz. In einer Ausführungsform der Erfindung ist die Saatfrequenz während der Ausführung des Verfahrens im Wesentlichen konstant, vorzugsweise konstant.

Zumindest während des Änderns der Resonanzfrequenz in Schritt c) erfolgt also keine Rücckopplung der in dem Resonator oszillierenden elektromagnetischen Resonatorstrahlung in eine Strahlungsquelle des Saatlichts.

Die in dem externen optischen Resonator auf die gewünschte Resonanzfrequenz abgestimmte Resonatorstrahlung wird gemäß dem erfindungsgemäßen Verfahren aus dem externen optischen Resonator als Nutzstrahlung mit der Nutzfrequenz ausgekoppelt. Die Nutzfrequenz der Nutzstrahlung wird in dem Abstimmprozess gemäß Schritt c) festgelegt. Die Nutzfrequenz unterscheidet sich damit maximal um die Abstimmbandbreite von der Saatfrequenz der elektromagnetischen Strahlung.

Das Erzeugen der elektromagnetischen Nutzstrahlung in einem von einer Strahlungsquelle unabhängigen externen optischen Resonator und der Ausschluss einer Rückkopplung der abgestimmten Resonatorstrahlung oder der erzeugten Nutzstrahlung, insbesondere während einer Änderung der Resonanzfrequenz gemäß einer Ausführungsform der Erfindung, bietet den Vorteil, dass die so erzeugte Nutzstrahlung unabhängig von den Eigenschaften der elektromagnetischen Strahlungsquelle ist, da das Erzeugen der Nutzstrahlung, insbesondere aber das Abstimmen der Resonatorstrahlung, unabhängig von der Strahlungsquelle erfolgt. Daher treten bei dem erfindungsgemäßen Verfahren auch keine Modensprünge auf, die beispielsweise bei einem Abstimmen des aktiven Mediums eines Lasers üblicherweise auftreten, da ein Abstimmen der Strahlungsquelle für das Saatlicht erfindungsgemäß nicht notwendig ist.

Als Folge ermöglicht das erfindungsgemäße Verfahren eine reproduzierbare und stabile Erzeugung elektromagnetischer Nutzstrahlung mit einer mit der Saatfrequenz des zur Erzeugung verwendeten Saatlichts identischen Nutzfrequenz oder einer von der Saatfrequenz verschiedenen Nutzfrequenz. In dem externen optischen Resonator oszillierende Resonatorstrahlung ist immer einmodig und daher im Hinblick auf ihre Amplitude stabil, da ein Sprung auf eine andere in der Resonanzfrequenz verschiedene Mode selbst während des Abstimmens der Resonanzfrequenz des externen und optischen Resonators physikalisch unmöglich ist.

Da während des Abstimmprozesses keine Rückkopplung in die Strahlungsquelle des Saatlichts erfolgt, ist eine Abstimmung über einen vergleichsweise großen Frequenzbereich modensprungfrei möglich, da das Abstimmen unabhängig von dem aktiven Medium der Strahlungsquelle erfolgt.

In einer Ausführungsform der Erfindung ist die Saatfrequenz des Saatlichts während des Einkoppelns des Saatlichts in den externen optischen Resonator in Schritt b) konstant. Dies ist insbesondere dann zu gewährleisten, wenn weder abgestimmte Resonatorstrahlung noch erzeugte Nutzstrahlung in die Strahlungsquelle des Saatlichts zurückgekoppelt werden.

In einer weiteren Ausführungsform der Erfindung ist nicht ausgeschlossen, dass während des Änderns der Resonanzfrequenz weiter Saatlichts in den externen optischen Resonator eingekoppelt wird. Eine Rückkopplung der Resonatorstrahlung in die elektromagnetische Strahlungsquelle ist zu diesem Zeitpunkt jedoch ausgeschlossen.

In einer weiteren Ausführungsform der Erfindung wird das Einkoppeln des Saatlichts in den externen optischen Resonator zeitlich vor Schritt c), also vor dem Ändern der Resonanzfrequenz, unterbrochen.

Grundsätzlich ist das erfindungsgemäße Verfahren unabhängig davon, wie das Pumpen des Verstärkungsmediums erfolgt. Das Pumpen kann beispielsweise ein elektrisches Pumpen des Verstärkungsmediums sein.

In einer Ausführungsform der Erfindung erfolgt das Pumpen des Verstärkungsmediums optisch durch Beleuchten mit einer Strahlungsquelle. Dabei wird zum Pumpen des Verstärkungsmediums eine Lichtquelle verwendet, so wie sie aus dem Stand der Technik bekannt ist. In dieser Ausführungsform der Erfindung umfasst das Pumpen des Verstärkungsmediums die Schritte: Erzeugen und Abstrahlen einer elektromagnetischen Verstärkungspumpstrahlung mit einer Verstärkungspumpleistung und Beleuchten des Verstärkungsmediums mit der Verstärkungspumpstrahlung, wobei die Verstärkungspumpleistung geringer ist als eine für eine Lasertätigkeit des Resonators erforderliche Schwellenpumpleistung. In einer Ausführungsform der Erfindung weist die Verstärkungspumpstrahlung eine Verstärkungspumpfrequenz auf, wobei die Verstärkungspumpfrequenz von der Saatfrequenz verschieden ist.

In einer Ausführungsform ist der Resonator bei der Verstärkungspumpfrequenz der Verstärkungspumpstrahlung absorbierend. Mit anderen Worten beschrieben ist die Güte des Resonators bei der Verstärkungspumpfrequenz gering. Daher kann in einer solchen Ausführungsform die Verstärkungspumpstrahlung auch mit einer großen Linienbreite effizient in den Resonator eingekoppelt werden. Dies wiederum ermöglicht die Verwendung einer breitbandigen Strahlungsquelle, insbesondere einer Leuchtdiode oder einer breitbandigen Laserdiode.

In einer Ausführungsform erfolgt die Änderung der Resonanzfrequenz des externen optischen Resonators aufgrund einer Änderung der optischen Resonatorlänge des Resonators. Dies kann beispielsweise erreicht werden, indem der externe optische Resonator ein Resonatormaterial mit einem elektrooptischen Effekt aufweist. Wenn an ein solches Resonatormaterial eine externe Spannung angelegt wird, ändern sich die optischen Eigenschaften, insbesondere der Brechungsindex, des externen optischen Resonators und damit auch die optische Weglänge und die Resonanzfrequenz des externen optischen Resonators.

In einer Ausführungsform der Erfindung weist der Resonator daher ein elektrooptisches Material auf, wobei sich die Resonatorstrahlung durch das elektrooptische Material in dem Resonator ausbreitet und wobei das Ändern der Resonanzfrequenz die Schritte umfasst: Anlegen einer Spannung an das elektrooptische Material und Ändern der Spannung.

In einer Ausführungsform der Erfindung füllt das elektrooptische Material den Resonator in dem Sinne vollständig aus, dass die in dem Resonator oszillierende Resonatorstrahlung nur in dem elektrooptischen Material propagiert. Je länger die Interaktionslänge zwischen der Resonatorstrahlung und dem elektrooptischen Material ist, desto effizienter lässt sich die Resonanzfrequenz des Resonators abstimmen. Beispielsweise ist der Resonator dabei ein linearer Resonator, der von einem Stegwellenleiter aus dem elektrooptischen Material gebildet ist, wobei die Endfacetten des Stegwellenleiters als Resonatorspiegel dienen. In einer weiteren Ausführungsform ist der Resonator ein Flüstergalerieresonator, der aus dem elektrooptischen Material gebildet ist.

In einer weiteren Ausführungsform erfolgt das Ändern der Resonanzfrequenz primär durch einen linearen elektrooptischen Effekt (Pockels Effekt), sodass eine Änderung der Resonanzfrequenz durch nichtlineare elektrooptische Effekte vernachlässigbar klein ist. Auch dies dient der zuverlässigen reproduzierbaren und linearen Abstimmung der Nutzfrequenz der Nutzstrahlung.

In einer Ausführungsform der Erfindung ist das Verstärkungsmedium mit dem elektrooptischen Material identisch, wobei das Verstärkungsmedium in einer Ausführungsform durch ein mit Seltenerdionen dotiertes Lithiumniobat bzw. Lithiumtantalat gebildet ist. Dieses Material weist sowohl eine hinreichende Verstärkung als auch einen hinreichenden elektrooptischen Effekt zum Ändern der Resonatorlänge auf.

In einer Ausführungsform der Erfindung ist die Verstärkungspumpfrequenz gleich 300 THz oder größer.

In einer weiteren Ausführungsform der Erfindung liegt die Saatfrequenz in einem Frequenzbereich von 274 THz bis 278 THz.

In einer weiteren Ausführungsform erfolgt das Auskoppeln der elektromagnetischen Resonatorstrahlung als Nutzstrahlung in Schritt d) zeitgleich mit dem Ändern der Resonanzfrequenz des externen optischen Resonators in Schritt c). Dies führt dazu, dass permanent Resonatorstrahlung als Nutzstrahlung mit einer Nutzfrequenz ausgekoppelt wird, wobei die Nutzfrequenz je nach Zeitpunkt der Auskopplung variiert, da der Abstimmprozess weiter voranschreitet. Es wird also über die Dauer des Abstimmens der Resonanzfrequenz zeitlich nacheinander Nutzstrahlung mit einer Mehrzahl von Nutzfrequenzen ausgekoppelt, die innerhalb der Abstimmbandbreite des externen optischen Resonators liegen.

In einer Ausführungsform decken die Nutzfrequenzen, die zeitlich nacheinander erzeugt werden, ein kontinuierliches Frequenzspektrum innerhalb der Abstimmbandbreite ab. In einer weiteren Ausführungsform wird die Nutzstrahlung erst aus dem externen optischen Resonator ausgekoppelt, nachdem das Abstimmen der Resonanzfrequenz vollständig beendet ist und die Resonanzfrequenz einen vorgegebenen Zielwert erreicht hat. In einer Ausführungsform der Erfindung weist daher der externe Resonator einen Güteschalter auf, der so eingerichtet und angeordnet ist, dass Strahlung erst aus dem Resonator ausgekoppelt wird, wenn bei dem Abstimmen die Zielfrequenz erreicht wurde.

In einer weiteren Ausführungsform der Erfindung werden die Schritte b), c) und d) periodisch wiederholt. So kann in bestimmten zeitlichen Abständen, die von der Wiederholrate der Schritte abhängen, eine elektromagnetische Nutzstrahlung mit einer bestimmten Nutzfrequenz zur Verfügung gestellt werden. Die bei dieser Ausführungsform erzeugte Nutzstrahlung kann als gepulste Strahlung bezeichnet werden, deren Repetitionsrate von der Wiederholrate des Verfahrens abhängt.

In einer Ausführungsform der Erfindung ist in Schritt c) die Abstimmbandbreite größer als eine Saatfrequenzbandbreite des Saatlichts. In einer weiteren Ausführungsform der Erfindung wird während des Schrittes c) das Einkoppeln des Saatlichts in den Resonator unterbrochen.

Die zuvor genannte Aufgabe wird auch durch eine Vorrichtung zum Erzeugen einer elektromagnetischen Nutzstrahlung mit einer Nutzfrequenz gelöst, wobei die Vorrichtung aufweist: eine erste Strahlungsquelle, die derart ausgestaltet ist, dass die erste Strahlungsquelle in einem Betrieb der Vorrichtung Saatlicht mit einer Saatfrequenz erzeugt und abstrahlt, einen externen optischen Resonator und eine Steuerung, wobei der Resonator derart angeordnet und ausgestaltet ist, dass der Resonator eine abstimmbare Resonanzfrequenz aufweist, dass in dem Betrieb der Vorrichtung die von der ersten Strahlungsquelle abgestrahlte Saatlicht in den Resonator eingekoppelt wird und dass in dem Betrieb der Vorrichtung die Nutzstrahlung aus dem Resonator ausgekoppelt wird, wobei die Steuerung derart wirksam entweder mit dem Resonator oder mit der ersten elektromagnetischen Strahlungsquelle und dem Resonator verbunden ist und derart eingerichtet ist, dass die Steuerung in dem Betrieb der Vorrichtung zumindest die Saatfrequenz oder die Resonanzfrequenz so einstellt, dass die Resonanzfrequenz zumindest zunächst im Wesentlichen gleich der Saatfrequenz ist, sodass in dem Resonator eine elektromagnetische Resonatorstrahlung zumindest zunächst mit der Resonanzfrequenz oszilliert, und dann die Resonanzfrequenz des Resonators und damit die Nutzfrequenz des Nutzstrahlung über eine Abstimmbandbreite adiabatisch ändert, wobei die Vorrichtung derart ausgestaltet ist, dass die Saatfrequenz einer Änderung der Resonanzfrequenz nicht folgt, wobei die Vorrichtung weiterhin aufweist, eine Pumpeinrichtung und ein Verstärkungsmedium, wobei das Verstärkungsmedium in dem Resonator angeordnet ist, sodass in dem Betrieb der Vorrichtung das Verstärkungsmedium von der Pumpeinrichtung gepumpt wird und die Resonatorstrahlung in dem Verstärkungsmedium verstärkt wird, wobei die Verstärkung kleiner ist als eine durch den Resonator und das Verstärkungsmedium vorgegebene für eine Lasertätigkeit des Resonators erforderliche Schwellenverstärkung.

Es ist erkennbar, dass diese Vorrichtung insbesondere zum Ausführen des zuvor in Ausführungsformen beschriebenen Verfahrens geeignet ist.

Soweit das Verfahren mit einer Vorrichtung gemäß dieser Erfindung ausgeführt wird, so weist diese Vorrichtung die entsprechenden Einrichtungen hierfür auf. Soweit im folgenden Aspekte im Hinblick auf die Vorrichtung beschrieben werden, so gelten diese auch für das entsprechende Verfahren zum Erzeugen einer elektromagnetischen Nutzstrahlung und umgekehrt.

In einer Ausführungsform der Erfindung weist der Resonator eine abstimmbare Resonanzfrequenz auf, wobei die Steuerung derart mit dem Resonator verbunden ist, dass die Steuerung in dem Betrieb der Vorrichtung ausgehend von einer Resonanzfrequenz, die im Wesentlichen gleich der Saatfrequenz ist, dann die Resonanzfrequenz des Resonators und damit die Nutzfrequenz der Nutzstrahlung über eine Abstimmbandbreite hinweg ändert.

In einer Ausführungsform der Erfindung weist der Resonator ein elektrooptisches Element mit einem elektrooptischen Material auf, sodass eine optische Resonatorlänge des Resonators und damit die Resonanzfrequenz in Abhängigkeit durch eine an das elektrooptische Material angelegte Spannung änderbar ist, wobei die Steuerung derart mit dem elektrooptischen Element verbunden ist, dass die Steuerung in dem Betrieb der Vorrichtung die an dem elektrooptischen Material anliegende Spannung und damit die optische Resonatorlänge steuert.

In einer Ausführungsform der Erfindung ist das elektrooptische Material das Verstärkungsmedium in dem Resonator.

In einer weiteren Ausführungsform der Erfindung umfasst der Resonator einen Wellenleiter, insbesondere einen integrierten Wellenleiter.

In einer weiteren Ausführungsform der Erfindung ist ein Material des Wellenleiters das elektrooptische Material, wobei das elektrooptische Element eine Mehrzahl von Elektroden zum Anlegen der Spannung an das elektrooptische Material aufweist, wobei die Elektroden einen Abstand von 1 mm oder weniger, vorzugsweise von 100 µm oder weniger von dem Wellenleiter aufweisen.

Als Pumpeinrichtung für das Verstärkungsmedium ist beispielsweise eine Stromquelle geeignet, die ein elektrisches Pumpen des Verstärkungsmediums ermöglicht. In einer Ausführungsform der Erfindung wird das Verstärkungsmedium optisch gepumpt. Dazu weist in einer Ausführungsform die Vorrichtung eine zweite Strahlungsquelle auf, wobei die zweite Strahlungsquelle derart ausgestaltet ist, dass die zweite Strahlungsquelle in dem Betrieb der Vorrichtung elektromagnetische Verstärkungspumpstrahlung mit einer Verstärkungspumpfrequenz und einer Verstärkungspumpleistung erzeugt, wobei das Verstärkungsmedium in dem Resonator derart angeordnet ist, dass in dem Betrieb der Vorrichtung das Verstärkungsmedium von der Verstärkungspumpstrahlung der zweiten Strahlungsquelle gepumpt wird. Dabei ist in einer Ausführungsform der Erfindung die Verstärkungspumpleistung kleiner als ein durch den Resonator und das Verstärkungsmedium vorgegebene Laserpumpschwellenleistung. Dabei setzt im Sprachgebrauch der vorliegenden Anmeldung bei Erreichen der Laserpumpschwellenleistung eine Lasertätigkeit des Resonators ein.

In einer Ausführungsform der Erfindung ist die Verstärkungspumpfrequenz von der Saatfrequenz verschieden.

Weitere Vorteile, Merkmale und Anwendungsmöglichkeiten der vorliegenden Erfindung werden anhand der folgenden Beschreibung einer Ausführungsform und der dazugehörigen Figur deutlich.

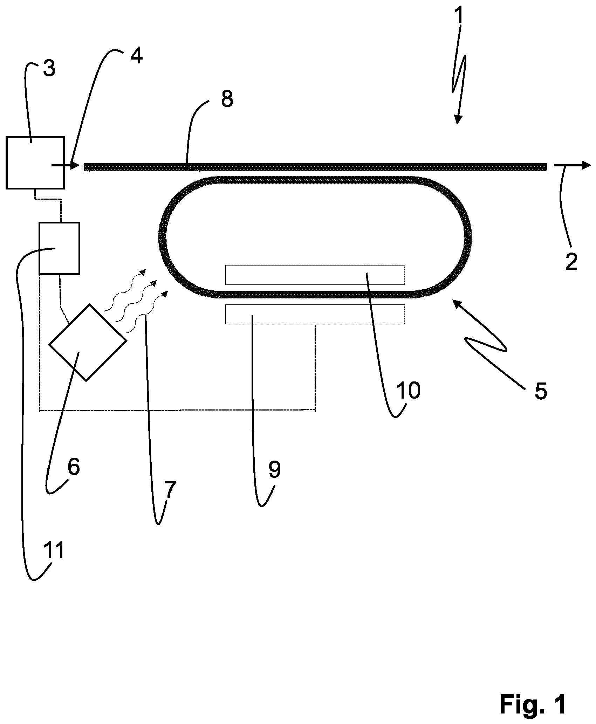

- Figur 1: ist eine schematische Draufsicht auf eine Ausführungsform einer Vorrichtung zum Erzeugen einer elektromagnetischen Nutzstrahlung.

Die in Figur 1 dargestellte Ausführungsform einer Vorrichtung 1 zum Erzeugen einer elektromagnetischen Nutzstrahlung ist als integrierte Quelle aufgebaut. Die gezeigten, elektromagnetische Strahlung führenden Elemente sind als Stegwellenleiter auf einem einzigen Trägerchip ausgeführt.

Ziel des in Figur 1 gezeigten Aufbaus ist es, elektromagnetische Nutzstrahlung 2 als Ausgang der Vorrichtung 1 bereitzustellen, die mit schnell und linear über eine möglichst große Abstimmungsbandbreite hinweg, reproduzierbar und wiederholbar abstimmbar ist. Damit kann die Nutzstrahlung 2 bspw. zur Abstandsmessung in einem FMCW-LIDAR verwendet werden.

In der dargestellten Ausführungsform umfasst die Vorrichtung 1 eine erste Strahlungsquelle 3 für Saatlicht 4, einen als Ringresonator 5 ausgestalteten Resonator sowie eine zweite Strahlungsquelle 6 zum Erzeugen elektromagnetischer Verstärkungspumpstrahlung 7.

Das von der ersten Strahlungsquelle 3 erzeugte und abgestrahlte Saatlicht 4 hat eine feste Saatfrequenz, wobei das Saatlicht 4 in der dargestellten Ausführungsform eine Vakuumwellenlänge von 1084 nm aufweist. Das Saatlicht 4 wird über einen Koppelwellenleiter 8 in den Ringresonator 5 eingekoppelt.

Der Koppelwellenleiter 8 ist derart an den Resonator 5 gekoppelt, dass sowohl Saatlicht 4 in den Resonator 5 eingekoppelt wird als auch Nutzstrahlung 2 aus dem Resonator 5 ausgekoppelt wird.

Das die elektromagnetische Strahlung 4 führende Material des Ringresonators 5 ist in der dargestellten Variante ein mit Neodym dotiertes Lithiumniobat. Dieses zeigt einen ausgeprägten linearen elektrooptischen Effekt (Pockels-Effekt). Die optische Länge des Resonators 5 und damit seine Resonanzfrequenz hängen daher linear von einer an das Material des Wellenleiters des Resonators 5 angelegten Spannung ab. Zwei länglich ausgedehnte Elektroden 9, 10 dienen dazu, ein definiertes elektrisches Feld zu erzeugen. Da sich ein Teil des Wellenleiters des Resonators 5 zwischen den beiden Elektroden 9, 10 erstreckt, durchsetzt das sich zwischen den Elektroden 9, 10 ausbildende elektrische Feld diesen Teil des Wellenleiters. Wird die Spannung, welche an den beiden Elektroden 9, 10 anliegt, geändert, so ändert sich der Brechungsindex des den Resonator 5 bildenden Wellenleiters zwischen den Elektroden. Mit dem Brechungsindex ändern sich jedoch auch die optische Weglänge der elektromagnetischen Resonatorstrahlung in dem Resonator 5 und damit seine Resonanzfrequenz.

In der dargestellten Ausführungsform wird nach dem Einkoppeln des Saatlichts 4 in den Resonator 5 die Quelle 3 ausgeschaltet oder ihre Einkopplung des Saatlichts 4 in den Resonator 5 unterbrochen. Die Steuerung 11 stellt zunächst die Resonanzfrequenz des Resonators 5 so ein, dass sie im Wesentlichen gleich der Saatfrequenz des Saatlichts 4 ist. Nachdem das Saatlicht 4 in den Resonator 5 eingekoppelt wurde, verändert die Steuerung 11 über das elektrische Feld zwischen den beiden Elektroden 9 und 10 die Resonanzfrequenz des externen optischen Resonators 5 über eine vorgegebene Abstimmbandbreite. Dabei ist die Abstimmbandbreite größer als eine Saatfrequenzbandbreite des Saatlichts 4. Die Abstimmbandbreite beträgt in der gezeigten Ausführungsform 300 GHz.

Die Nutzfrequenz der aus dem Resonator 5 ausgekoppelten Nutzstrahlung 2 folgt der Abstimmung der Resonanzfrequenz des Resonators 5. Bei der in Figur 1 gezeigten Ausführungsform der Vorrichtung 1 wird elektromagnetische Nutzstrahlung 2 kontinuierlich ausgekoppelt, sodass über die Dauer des Abstimmens Nutzstrahlung 2 mit je nach Zeitpunkt des Auskoppelns unterschiedlichen Nutzfrequenzen erzeugt wird, wobei die Nutzfrequenzen innerhalb der Abstimmbandbreite von 300 GHz liegen.

Nachdem ein Abstimmprozess über die Abstimmbandbreite hinweg durchgeführt wurde und elektromagnetische Nutzstrahlung 2 vollständig ausgekoppelt wurde, beginnt der Prozess erneut. D.h. es wird Saatlicht 4 wieder in den externen optischen Resonator 5 eingekoppelt, der Abstimmprozess der Resonanzfrequenz des externen optischen Resonators 5 beginnt und Resonatorstrahlung wird als Nutzstrahlung 2 ausgekoppelt.

Es versteht sich, dass die Führung der elektromagnetischen Resonatorstrahlung im Resonator 5 aufgrund der Bauform des Resonators, aber auch grundsätzlich aufgrund der Auskopplung der Nutzstrahlung 2 aus dem Resonator 5 mit einem Verlust behaftet ist. Die Nutzungsdauer über die Nutzstrahlung 2 hinweg, die nach einem einmaligen Pumpen mit Saatlicht 4 in dem Resonator 5 erzeugt wird, aus dem Resonator 5 ausgekoppelt wird, hängt damit unmittelbar von der Güte des Resonators 5 ab. Um die Güte des Resonators 5 synthetisch zu verlängern, wird das mit Neodym dotierte Lithiumniobat-Material des Wellenleiters des Resonators 5 mithilfe einer zweiten elektromagnetischen Strahlungsquelle 6 gepumpt. Dazu erzeugt die zweite Strahlungsquelle 6 elektromagnetische Verstärkungspumpstrahlung 7, welche das Material des Wellenleiters, der den Resonator 5 bildet, anregt. Auf diese Weise verstärkt das Material des Wellenleiters die Resonatorstrahlung. Entscheidend für die Erhöhung der Güte des Resonators 5 ist dabei, dass die Verstärkungspumpleistung der Verstärkungspumpstrahlung 7 so gewählt ist, dass in dem Resonator 5 keine Laseraktivität anschwingt, sondern lediglich eine Verstärkung unterhalb des Laserschwellenwertes erfolgt. Auf diese Weise wird sichergestellt, dass über die gewählte Resonanzfrequenz des Resonators 5 hinaus keine weiteren Resonatormoden anschwingen.

Durch die Wahl von mit Neodym dotierten Lithiumniobat als Wellenleitermaterial des Resonators 5 ist es möglich, mit einem Material sowohl die Verstärkung bereitzustellen als auch eine elektrooptische Abstimmbarkeit des Resonators 5 zu gewährleisten. Ferner ist sichergestellt, dass das Material, aus welchem der Wellenleiter des Resonators 5 hergestellt ist, für das Saatlicht 4 und für die Resonatorstrahlung transparent ist, wobei die Transparenz nicht von der Verstärkungspumpleistung der Verstärkungspumpstrahlung 7 abhängt.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird.

In den Ansprüchen schließt das Wort "aufweisen" nicht andere Elemente oder Schritte aus, und der unbestimmte Artikel "eine" oder "ein" schließt eine Mehrzahl nicht aus. Bezugszeichen in den Ansprüchen sind nicht als Beschränkung des Schutzbereichs gedacht.

### Bezugszeichen

- 1: Vorrichtung
- 2: Nutzstrahlung
- 3: erste Strahlungsquelle
- 4: Saatlicht
- 5: Resonator
- 6: zweite Strahlungsquelle
- 7: Verstärkungspumpstrahlung
- 8: Koppelwellenleiter
- 9, 10: Elektrode
- 11: Steuerung

## Patentansprüche

1. Verfahren zum Erzeugen einer elektromagnetischen Nutzstrahlung (2) mit einer Nutzfrequenz mit den Schritten:
a) Erzeugen und Abstrahlen von Saatlicht (4) mit einer Saatfrequenz,
b) Einkoppeln des Saatlichts (4) in einen externen optischen Resonator (5) mit einer Resonanzfrequenz, wobei die Resonanzfrequenz zumindest zunächst im Wesentlichen gleich der Saatfrequenz ist, so dass in dem Resonator (5) eine elektromagnetische Resonatorstrahlung mit der Resonanzfrequenz oszilliert,
c) zeitlich nach Schritt b) adiabatisches Ändern der Resonanzfrequenz des Resonators (5), so dass die Resonanzfrequenz der in dem Resonator (5) oszillierenden Resonatorstrahlung über eine Abstimmbandbreite geändert wird, wobei die Saatfrequenz der Änderung der Resonanzfrequenz nicht folgt, und
d) Auskoppeln der Resonatorstrahlung als Nutzstrahlung (2) mit der von der Saatfrequenz verschiedenen Nutzfrequenz aus dem Resonator (5),
**dadurch gekennzeichnet, dass** das Verfahren weiterhin die Schritte aufweist
e) Pumpen eines in dem Resonator (5) angeordneten Verstärkungsmediums und
f) Verstärken der in dem Resonator (5) oszillierenden Resonatorstrahlung in dem Verstärkungsmedium, wobei die Verstärkung kleiner ist als eine durch den Resonator (5) und das Verstärkungsmedium vorgegebene für eine Lasertätigkeit des Resonators (5) erforderliche Schwellenverstärkung.

2. Verfahren nach dem vorhergehenden Anspruch, wobei der Resonator (5) ein Mikroresonator ist.

3. Verfahren nach einem der vorhergehenden Ansprüche, wobei das Verstärkungsmedium ein Vier-Niveau-Lasermedium ist.

4. Verfahren nach einem der vorhergehenden Ansprüche, wobei der Resonator (5) ein elektrooptisches Material aufweist, wobei sich die Resonatorstrahlung durch das elektrooptische Material ausbreitet, und wobei das adiabatische Ändern der Resonanzfrequenz die Schritte umfasst
Anlegen einer Spannung an das elektrooptische Material und
Ändern der Spannung.

5. Verfahren nach Anspruch 4, wobei das Verstärkungsmedium und das elektrooptische Material ein mit Seltenerdionen dotiertes Lithiumniobat oder ein mit Seltenerdionen dotiertes Lithiumtantalat ist.

6. Verfahren nach einem der vorhergehenden Ansprüche, wobei die Schritte c) und d) gleichzeitig ausgeführt werden oder Schritt d) zeitlich nach Schritt c) ausgeführt wird.

7. Verfahren nach einem der vorhergehenden Ansprüche, wobei in Schritt c) die Abstimmbandbreite größer ist als eine Saatfrequenzbandbreite des Saatlichts (4).

8. Verfahren nach einem der vorhergehenden Ansprüche, wobei während des Schrittes c) das Einkoppeln des Saatlichts (4) in den Resonator (5) unterbrochen wird.

9. Verfahren nach einem der vorhergehenden Ansprüche, wobei das Pumpen des Verstärkungsmediums die Schritte umfasst
Erzeugen und Abstrahlen einer elektromagnetischen Verstärkungspumpstrahlung (7) einer Verstärkungspumpleistung und
Beleuchten des Verstärkungsmediums mit der Verstärkungspumpstrahlung (7), wobei die Verstärkungspumpleistung geringer ist als eine für die Lasertätigkeit des Resonators (5) erforderliche Schwellenpumpleistung.

10. Vorrichtung (1) zum Erzeugen einer elektromagnetischen Nutzstrahlung (2) mit einer Nutzfrequenz, wobei die Vorrichtung (1) aufweist
eine erste Strahlungsquelle (3), die derart ausgestaltet ist, dass die erste Strahlungsquelle (3) in einem Betrieb der Vorrichtung (1) elektromagnetisches Saatlicht (4) mit einer Saatfrequenz erzeugt und abstrahlt,
einen externen optischen Resonator (5) und
eine Steuerung (11),
wobei der Resonator (5) derart angeordnet und ausgestaltet ist,
dass der Resonator (5) eine abstimmbare Resonanzfrequenz aufweist, dass in dem Betrieb der Vorrichtung (1) das von der ersten Strahlungsquelle (3) abgestrahlte Saatlicht (4) in den Resonator (5) eingekoppelt wird und
dass in dem Betrieb der Vorrichtung (1) die Nutzstrahlung (2) aus dem Resonator (5) ausgekoppelt wird,
wobei die Steuerung (11) derart wirksam entweder mit dem Resonator (5) oder mit der ersten elektromagnetischen Strahlungsquelle (3) und dem Resonator (5) verbunden ist und derart eingerichtet ist,
dass die Steuerung (11) in dem Betrieb der Vorrichtung (1) zumindest die Saatfrequenz oder die Resonanzfrequenz so einstellt, dass die Resonanzfrequenz zumindest zunächst im Wesentlichen gleich der Saatfrequenz ist, so dass in dem Resonator (5) eine elektromagnetische Resonatorstrahlung zumindest zunächst mit der Resonanzfrequenz oszilliert, und dann die Resonanzfrequenz des Resonators (5) und damit die Nutzfrequenz der Nutzstrahlung (2) über eine Abstimmbandbreite adiabatisch ändert,
wobei die Vorrichtung (1) derart ausgestaltet ist, dass die Saatfrequenz einer Änderung der Resonanzfrequenz nicht folgt,
**dadurch gekennzeichnet, dass** die Vorrichtung (1) weiterhin aufweist
eine Pumpeinrichtung und
ein Verstärkungsmedium,
wobei das Verstärkungsmedium in dem Resonator (5) angeordnet ist, so dass in dem Betrieb der Vorrichtung (1) das Verstärkungsmedium von der Pumpeinrichtung gepumpt wird und die Resonatorstrahlung in dem Verstärkungsmedium verstärkt wird,
wobei die Verstärkung kleiner ist als eine durch den Resonator (5) und das Verstärkungsmedium vorgegebene für eine Lasertätigkeit des Resonators erforderliche Schwellenverstärkung.

11. Vorrichtung (1) nach Anspruch 10, wobei der Resonator (5) ein elektrooptisches Element mit einem elektrooptischen Material aufweist, so dass eine optische Resonatorlänge des Resonators (5) und damit die Resonanzfrequenz in Abhängigkeit von einer an das elektrooptische Material angelegten Spannung änderbar ist, und wobei die Steuerung (11) derart mit dem elektrooptischen Element verbunden ist, dass die Steuerung (11) in dem Betrieb der Vorrichtung (1) die an dem elektrooptischen Material anliegende Spannung und damit die optische Resonatorlänge steuert.

12. Vorrichtung (1) nach Anspruch 11, wobei das elektrooptische Material das Verstärkungsmedium ist.

13. Vorrichtung (1) nach einem der Ansprüche 10 bis 12, wobei der Resonator (5) einen Wellenleiter, vorzugsweise einen integrierten Wellenleiter, umfasst.

14. Vorrichtung (1) nach Anspruch 13, wobei ein Material des Wellenleiters das elektrooptische Material nach Anspruch 11 ist, wobei das elektrooptische Element eine Mehrzahl von Elektroder (9, 10) zum Anlegen der Spannung an das elektrooptische Material aufweist, wobei die Elektroden (9, 10) einen Abstand von 100 µm oder weniger von dem Wellenleiter aufweisen.

## Claims

1. A method of generating an electromagnetic useful radiation (2) comprising a useful frequency, the method comprising the steps of:
a) generating and emitting seed light (4) comprising a seed frequency,
b) coupling the seed light (4) into an external optical resonator (5), which external optical resonator (5) comprises a resonance frequency, wherein the resonance frequency is at least initially substantially equal to the seed frequency, so that an electromagnetic resonator radiation oscillates in the resonator (5) at the resonance frequency,
c) after step b), adiabatically changing the resonance frequency of the resonator (5) so that the resonance frequency of the resonator radiation oscillating in the resonator (5) is changed over a tuning bandwidth, wherein the seed frequency does not follow the change of the resonance frequency, and
d) decoupling the resonator radiation from the resonator (5) as useful radiation (2) comprising the useful frequency different from the seed frequency,
**characterized in that** the method further comprises the steps of
e) pumping an amplifying medium arranged in the resonator (5) and
f) amplifying the resonator radiation oscillating in the resonator (5) in the amplification medium, wherein the amplification is smaller than a threshold amplification required by the resonator (5) and the amplifying medium for a laser action of the resonator (5).

2. The method according to the preceding claim, wherein the resonator (5) is a microresonator.

3. The method according to anyone of the preceding claims, wherein the amplifying medium is a four-level laser medium.

4. The method according to anyone of the preceding claims, wherein the resonator (5) comprises an electro-optic material, wherein the resonator radiation propagates through the electro-optic material, and wherein the adiabatic changing of the resonance frequency comprises the steps of
applying a voltage to the electro-optic material and changing the voltage.

5. The method according to claim 4, wherein the amplifying medium and the electro-optic material is a rare earth ion doped lithium niobate or a rare earth ion doped lithium tantalate.

6. The method according to anyone of the preceding claims, wherein steps c) and d) are carried out simultaneously or step d) is carried out after step c).

7. The method according to anyone of the preceding claims, wherein in step c) the tuning bandwidth is larger than a seed frequency bandwidth of the seed light (4).

8. The method according to anyone of the preceding claims, wherein during step c) the coupling of the seed light (4) into the resonator (5) is interrupted.

9. The method according to anyone of the preceding claims, wherein pumping the amplifying medium comprises the steps of
generating and emitting an electromagnetic amplifying pump radiation (7) comprising an amplifying pump power; and
illuminating the amplifying medium with the amplifying pump radiation (7), wherein the amplifying pump power is less than a threshold power required for laser operation of the resonator (5).

10. A device (1) for generating an electromagnetic useful radiation (2) comprising a useful frequency, wherein the device (1) comprises
a first radiation source (3), which is configured such that the first radiation source (3) in an operation of the device (1) generates and emits electromagnetic seed light (4) with a seed frequency,
an external optical resonator (5) and
a controller (11),
wherein the resonator (5) is arranged and configured,
so that the resonator (5) has a tunable resonance frequency,
so that in the operation of the device (1) the seed light (4) emitted by the first radiation source (3) is coupled into the resonator (5), and
so that in the operation of the device (1) the useful radiation (2) is coupled out of the resonator (5),
wherein the controller (11) is operatively coupled either to the resonator (5) or to the first electromagnetic radiation source (3) and to the resonator (5) and is arranged,
so that the controller (11) in the operation of the device (1) sets at least the seed frequency or the resonance frequency such that the resonance frequency at least initially is substantially equal to the seed frequency, so that in the resonator (5) an electromagnetic resonator radiation at least initially oscillates with the resonance frequency, and then adiabatically changes the resonance frequency of the resonator (5) and thus the useful frequency of the useful radiation (2) over a tuning bandwidth,
wherein the device (1) is configured such that the seed frequency does not follow a change of the resonance frequency,
**characterized in that** the device (1) further comprises
a pumping means and
an amplifying medium,
wherein the amplifying medium is arranged in the resonator (5) so that in the operation of the device (1) the amplifying medium is pumped by the pumping means and the resonator radiation is amplified in the amplifying medium,
wherein the amplification is smaller than a threshold amplification required by the resonator (5) and the amplifying medium for a laser operation of the resonator.

11. The device (1) according to claim 10, wherein the resonator (5) comprises an electro-optic element, which electro-optic element comprises an electro-optic material such that an optical resonator length of the resonator (5) and thus the resonance frequency is changeable depending on a voltage applied to the electro-optic material, and wherein the controller (11) is coupled to the electro-optic element such that in operation of the device (1) the controller (11) controls the voltage applied to the electro-optic material and thus the optical resonator length.

12. The device (1) according to claim 11, wherein the electro-optic material is the amplifying medium.

13. The device (1) according to anyone of claims 10 to 12, wherein the resonator (5) comprises a waveguide, preferably an integrated waveguide.

14. The device (1) according to claim 13, wherein a material of the waveguide is the electro-optic material of claim 11, wherein the electro-optic element comprises a plurality of electrodes (9, 10) for applying the voltage to the electro-optic material, wherein the electrodes (9, 10) are spaced 100 µm or less from the waveguide.

## Revendications

1. Procédé de génération d'un rayonnement électromagnétique utile (2) ayant une fréquence utile, avec les étapes de
a) générer et émettre de la lumière dite «lumière seeding » (4) ayant une fréquence dite «fréquence seeding »,
b) coupler la lumière dite «lumière seeding» (4) dans un résonateur optique (5) externe ayant une fréquence de résonance, la fréquence de résonance étant d'abord sensiblement égale à la fréquence dite «fréquence seeding» de façon qu'un rayonnement de résonateur électromagnétique oscille dans le résonateur (5) avec la fréquence de résonance,
c) dans le temps, après l'étape b), changer de manière adiabatique la fréquence de résonance du résonateur (5) de façon que la fréquence de résonance du rayonnement de résonateur oscillant dans le résonateur (5) soit changée dans une largeur de plage d'accord, la fréquence dite «fréquence seeding» ne suivant pas le changement de la fréquence de résonance, et
d) découpler du résonateur (5) le rayonnement de résonateur en tant que rayonnement utile (2) avec la fréquence utile différente de la fréquence dite «fréquence seeding»,
**caractérisé en ce que** le procédé comprend en outre les étapes de
e) pomper un milieu amplificateur disposé dans le résonateur (5) et
f) amplifier dans le milieu amplificateur le rayonnement de résonateur oscillant dans le résonateur (5), l'amplification étant inférieure à une amplification seuil nécessaire pour un fonctionnement laser du résonateur (5) et définie par le résonateur (5) et le moyen d'amplification.

2. Procédé selon la revendication précédente, le résonateur (5) étant un micro-résonateur.

3. Procédé selon l'une des revendications précédentes, le milieu amplificateur étant un milieu laser à quatre niveaux.

4. Procédé selon l'une des revendications précédentes, le résonateur (5) comprenant une matière électro-optique, le rayonnement de résonateur s'étendant à travers la matière électro-optique, et la modification adiabatique de la fréquence de résonnance comprenant les étapes
appliquer une tension à la matière électro-optique et
changer la tension.

5. Procédé selon la revendication 4, le milieu amplificateur et la matière électro-optique étant un niobate de lithium pourvu d'ions de terres rares ou un tantalate de lithium pourvu d'ions de terres rares.

6. Procédé selon l'une des revendications précédentes, les étapes c) et d) étant mises en oeuvre simultanément ou l'étape d) étant mise en oeuvre après l'étape c).

7. Procédé selon l'une des revendications précédentes, la bande passante d'accord à l'étape c) étant plus importante qu'une bande passante de la fréquence dite «fréquence seeding» de la lumière dite «lumière seeding» (4).

8. Procédé selon l'une des revendications précédentes, l'introduction de la lumière dite «lumière seeding» (4) dans le résonateur (5) étant interrompue pendant l'étape c).

9. Procédé selon l'une des revendications précédentes, le pompage du milieu amplificateur comprenant les étapes suivantes :
générer et diffuser un rayonnement de pompage amplificateur électromagnétique (7) d'une puissance de pompage amplificateur et
éclairer le milieu amplificateur avec le rayonnement de pompage amplificateur (7), la puissance de pompage amplificateur étant inférieure à une puissance de pompage seuil nécessaire pour un fonctionnement laser du résonateur (5).

10. Dispositif (1) pour générer un rayonnement électromagnétique utile (2) ayant une fréquence utile, le dispositif (1) comprenant
une première source de rayonnement (3) qui est configurée de manière telle que la première source de rayonnement (3) génère et émette, lors d'un fonctionnement du dispositif (1), de la lumière dite «lumière seeding» (4) avec une fréquence dite «fréquence seeding»,
un résonateur (5) optique externe et
une commande (11),
le résonateur (5) étant disposé et conçu de façon telle
que le résonateur (55) comprend une fréquence de résonance accordable, que, lors du fonctionnement du dispositif (1), la lumière dite «lumière seeding» (4) émise par la première source de rayonnement (3) est introduite dans le résonateur (5), et
que, lors du fonctionnement du dispositif (1), le rayonnement utile (2) est découplé du résonateur (5),
la commande (11) étant relié efficacement soit au résonateur (5), soit à la première source de rayonnement (3) électromagnétique et au résonateur (5), et étant aménagé de manière telle
que la commande (11), lorsque le dispositif (1) est en fonctionnement, règle au moins la fréquence dite «fréquence seeding» ou la fréquence de résonnance de façon telle que la fréquence de résonnance, du moins au début, soit sensiblement égale à la fréquence dite «fréquence seeding», si bien que, dans le résonateur (5), un rayonnement de résonateur électromagnétique oscille, du moins au début, avec la fréquence de résonnance, et qu'ensuite la fréquence de résonnance du résonateur (5) et ainsi la fréquence utile du rayonnement utile (2), change de manière adiabatique dans une bande passante d'accord,
le dispositif (1) étant configuré de manière telle que la fréquence dite «fréquence seeding» ne suive pas un changement de la fréquence de résonnance,
**caractérisé en ce que** le dispositif (1) comprend en outre
un dispositif de pompage et
un milieu amplificateur,
le milieu amplificateur étant disposé dans le résonateur (5) de manière telle que, lors d'un fonctionnement du dispositif (1), le milieu amplificateur est pompé par le dispositif de pompage, et que le rayonnement de résonnance est amplifié dans le milieu amplificateur,
l'amplification étant inférieure à une amplification donnée par le résonateur (5) et le milieu amplificateur et nécessaire pour un fonctionnement laser du résonateur.

11. Dispositif (1) selon la revendication 10, le résonateur (5) comprenant un élément électro-optique avec une matière électro-optique si bien qu'une longueur de résonnance optique du résonateur (5), et ainsi la fréquence de résonnance, peut être modifiée en fonction d'une tension appliquée à la matière électro-optique, et la commande (11) étant reliée à l'élément électro-optique de manière telle que la commande (11), lorsque le dispositif est en fonctionnement, commande la tension appliquée à la matière électro-optique et ainsi la longueur de résonnance optique.

12. Dispositif (1) selon la revendication 11, la matière électro-optique étant le milieu amplificateur.

13. Dispositif (1) selon l'une des revendications 10 à 12, le résonateur (5) comprenant un guide d'ondes, de préférence un guide d'ondes intégré.

14. Dispositif (1) selon la revendication (13), la matière du guide d'ondes étant la matière électro-optique selon la revendication 11, l'élément électro-optique comprenant une pluralité d'électrodes (9, 10) pour appliquer la tension à la matière électro-optique, les électrodes (9, 10) se trouvant à 100 µm ou moins du guide d'ondes.
